# EUROPEAN PATENT APPLICATION

(11) **EP 4 044 474 A2**
(43) Date of publication of application: **17.08.2022**
(21) Application number: 22180356.2
(22) Date of filing: 22.06.2022
(51) Int. Cl.: H04L 1/16, H04L 1/18

(54) **DATA TRANSMISSION METHOD AND APPARATUS, AND ELECTRONIC DEVICE**

(30) Priority: 25.06.2021 CN 202110712568
(71) Applicant: Apollo Intelligent Connectivity (Beijing) Technology Co., Ltd., Beijing 100176 (CN)
(72) Inventor: ZHOU, Wenhuan, Beijing, 100176 (CN)
(74) Representative: Maiwald Patent- und Rechtsanwaltsgesellschaft mbH

(57) **Abstract**

A data transmission method and apparatus, and an electronic device are provided. The method includes acquiring (S101, S201) a data packet to be transmitted, performing fragmentation processing on the data packet to be transmitted to acquire fragmented data packets; sending (S102, S202) all the fragmented data packets to a vehicle machine system in sequence; receiving (S103, S203) an acknowledgment message sent by the vehicle machine system once the vehicle machine system receives one of the fragmented data packets; acquiring (S104) a target fragmented data packet that needs to be retransmitted in response to determining that at least one of the fragmented data packets needs to be retransmitted based on received acknowledgment messages, and resending the target fragmented data packet to the vehicle machine system.

## Description

### TECHNICAL FIELD

The disclosure relates to a field of data processing technologies, and particularly to a field of artificial intelligence technologies, and more specifically to a field of intelligent transportation technologies.

### BACKGROUND

In a wireless projection screen process between a terminal and a vehicle machine system, a packet loss event often occurs in a data packet, so that a decoder decodes only based on a part of data packets received to obtain an audio, a video, etc. with a blurred screen phenomenon, a skipping frame phenomenon and the like, thereby greatly reducing the user experience.

Taking transmission of a data packet using a conventional transmission control protocol (TCP) as an example, in order to ensure data transmission stability, a data packet retransmission mechanism is often used.

However, since the data packet retransmission mechanism based on the conventional protocol is not perfect, technical problems such as long time consumption, poor efficiency and the like in the data transmission process are often caused. Therefore, it has become an important research direction how to improve the efficiency in the data transmission process on the premise of ensuring the data transmission stability.

### SUMMARY

The disclosure provides a data transmission method and apparatus, and an electronic device.

According to one aspect of the disclosure, a data transmission method is provided, and includes: acquiring a data packet to be transmitted; performing fragmentation processing on the data packet to be transmitted to acquire fragmented data packets; sending all the fragmented data packets to a vehicle machine system in sequence; receiving an acknowledgment message sent by the vehicle machine system once receiving one of the fragmented data packets; acquiring a target fragmented data packet that needs to be retransmitted in response to determining that at least one of the fragmented data packets needs to be retransmitted based on received acknowledgment messages, and resending the target fragmented data packet to the vehicle machine system.

The method of further includes adding the fragmented data packets to a cache queue, so that the target fragmented data packet is extracted from the cache queue in response to determining that at least one of the fragmented data packets needs to be retransmitted.

Acquiring a target fragmented data packet that needs to be retransmitted in response to determining that at least one of the fragmented data packets needs to be retransmitted based on received acknowledgment messages, includes determining a first data packet identifier corresponding to an acknowledgment message received currently; acquiring a second data packet identifier corresponding to an acknowledgment message received last time; determining that a packet loss event occurs in the fragmented data packet corresponding to a third data packet identifier between the first data packet identifier and the second data packet identifier, in response to the first data packet identifier and the second data packet identifier being discontinuous; and determining the fragmented data packet corresponding to the third data packet identifier as the target fragmented data packet.

Before determining the fragmented data packet corresponding to the third data packet identifier as the target fragmented data packet, the method further includes extracting data packet identifiers respectively from a continuous first preset number of acknowledgment messages received after the acknowledgment message corresponding to the second data packet identifier; and updating a number of times of the packet loss event occurring in the fragmented data packet corresponding to the third data packet identifier once determining that a data packet identifier extracted being not the third data packet identifier.

Resending the target fragmented data packet to the vehicle machine system, includes acquiring a number of times of the packet loss event occurring in the fragmented data packet corresponding to the third data packet identifier; determining whether the number of times reaches a second preset number; and resending the target fragmented data packet to the vehicle machine system in response to the number of times reaching the second preset number.

The method further includes acquiring a total time delay up to a current packet loss event in response to the number of times not reaching the second preset number; determining whether the total time delay reaches a first preset duration; resending the target fragmented data packet to the vehicle machine system in response to the total time delay reaching the first preset duration; and continuing receiving a next acknowledgment message in response to the total time delay not reaching the first preset duration.

After determining that the data packet identifier extracted being not the third data packet identifier, the method further includes adjusting a transmission rate of the fragmented data packets and/or adjusting a current storage space size of a buffer register in the vehicle machine system based on the number of times.

Adjusting a transmission rate of the fragmented data packets, includes acquiring a first adjustment value of the transmission rate based on the number of times; and adjusting the transmission rate of the fragmented data packets based on the first adjustment value.

Adjusting a current storage space size of a buffer register in the vehicle machine system, includes acquiring a remaining storage space size of the buffer register; acquiring a second adjustment value for the remaining storage space size based on the remaining storage space size and the number of times; generating a storage space size adjustment instruction based on the second adjustment value; and sending the storage space size adjustment instruction to the vehicle machine system, wherein the vehicle machine system is caused to adjust the remaining storage space size of the buffer register based on the storage space size adjustment instruction.

The method further includes acquiring a first total number of all the fragmented data packets and a second total number of all the received acknowledgment messages; and removing all the fragmented data packets from the cache queue in response to the second total number reaching the first total number.

The method further includes extracting a first preset number of the fragmented data packets from a cache queue in sequence and sending the extracted fragmented data packets to the vehicle machine system; and removing all the fragmented data packets from the cache queue in response to a number of acknowledgment messages received within a third preset duration not reaching the first preset number.

According to another aspect of the disclosure, another data transmission method is provided, and includes: receiving fragmented data packets sent by a terminal; sending one corresponding acknowledgment message to the terminal once receiving one of the fragmented data packets; and receiving a target fragmented data packet that needs to be retransmitted sent by the terminal in response to determining by the terminal that at least one of the fragmented data packets needs to be retransmitted based on received acknowledgment messages. Sending one corresponding acknowledgment message to the terminal once receiving one of the fragmented data packets, includes starting a thread in a thread pool for a received fragmented data packet; processing by the thread the received fragmented data packet; and sending the acknowledgment message for the received fragmented data packet to the terminal.

After sending the acknowledgment message for the received fragmented data packet to the terminal, the method further includes discarding the received fragmented data packet in response to the received fragmented data packet being already present in a blocking cache queue; and processing the received fragmented data packet based on a preset policy in response to the received fragmented data packet being not present in the blocking cache queue.

Processing the received fragmented data packet based on a preset policy, includes acquiring a data packet identifier corresponding to a fragmented data packet received currently and a data packet identifier corresponding to a fragmented data packet received last time; directly sending the fragmented data packet received currently and the fragmented data packet received last time to respective decoders in response to two data packet identifiers acquired adjacently being continuous identifiers; and adding all received fragmented data packets to the blocking cache queue in sequence in response to the two data packet identifiers acquired adjacently being discontinuous identifiers.

Adding all received fragmented data packets to the blocking cache queue in sequence, includes numbering cache locations in the blocking cache queue in sequence; and adding each received fragmented data packet to the cache location with a same number as the received fragmented data packet in the blocking cache queue.

After receiving a target fragmented data packet that needs to be retransmitted sent by the terminal, the method further includes taking out all the received fragmented data packets from the blocking cache queue; sorting the target fragmented data packet and the fragmented data packets taken out from the locking cache queue; and sending the sorted fragmented data packets to respective decoders.

The method further includes receiving a storage space size adjustment instruction sent by the terminal, to adjust a storage space size of a buffer register based on the storage space size adjustment instruction.

According to another aspect of the disclosure, an electronic device is provided, and includes: at least one processor; and a memory communicatively coupled to the at least one processor; the memory is stored with instructions executable by the at least one processor, when the instructions are performed by the at least one processor, the at least one processor is caused to perform the data transmission method as described in the first aspect of the disclosure or the data transmission method as described in the second aspect of the disclosure.

It should be understood that, the content described in the part is not intended to identify key or important features of embodiments of the disclosure, nor intended to limit the scope of the disclosure. Other features of the disclosure will be easy to understand through the following specification.

### BRIEF DESCRIPTION OF THE DRAWINGS

The drawings are intended to better understand the solution, and do not constitute a limitation to the disclosure.
FIG. 1 is a diagram according to a first embodiment of the disclosure;
FIG. 2 is a diagram according to a second embodiment of the disclosure;
FIG. 3 is a diagram according to a third embodiment of the disclosure;
FIG. 4 is a diagram according to a fourth embodiment of the disclosure;
FIG. 5 is a diagram according to a fifth embodiment of the disclosure;
FIG. 6 is a diagram according to a sixth embodiment of the disclosure;
FIG. 7 is a diagram illustrating a seventh embodiment of the disclosure;
FIG. 8 is a diagram illustrating an eighth embodiment of the disclosure;
FIG. 9 is a diagram illustrating a ninth embodiment of the disclosure;
FIG. 10 is a diagram according to a tenth embodiment of the disclosure;
FIG. 11 is a diagram according to an eleventh embodiment of the disclosure;
FIG. 12 is a diagram according to a twelfth embodiment of the disclosure;
FIG. 13 is a diagram according to a thirteenth embodiment of the disclosure;
FIG. 14 is a block diagram of a data transmission apparatus configured to perform a data transmission method in the embodiment of the disclosure;
FIG. 15 is a block diagram of a data transmission apparatus configured to perform a data transmission method in the embodiment of the disclosure;
FIG. 16 is a block diagram of a data transmission apparatus configured to perform a data transmission method in the embodiment of the disclosure;
FIG. 17 is a block diagram of a data transmission apparatus configured to perform a data transmission method in the embodiment of the disclosure;
FIG. 18 is a block diagram of an electronic device configured to perform a data transmission method in the embodiment of the disclosure.

### DETAILED DESCRIPTION

The exemplary embodiments of the present disclosure are described as below with reference to the accompanying drawings, which include various details of embodiments of the present disclosure to facilitate understanding, and should be considered as merely exemplary. Therefore, those skilled in the art should realize that various changes and modifications may be made to the embodiments described herein without departing from the scope of the present disclosure. Similarly, for clarity and conciseness, descriptions of well-known functions and structures are omitted in the following descriptions.

The technical fields referred to in the disclosure are briefly introduced as below.

Data processing refers to acquisition, storage, retrieval, processing, conversion and transmission of data. A basic purpose of data processing is to extract and derive data valuable and meaningful to some certain people from a large amount of data that may be disordered and difficult to understand.

Artificial intelligence (AI) is a subject that studies how a computer simulates certain thinking processes and intelligent behaviors (such as learning, reasoning, thinking, planning, etc.) of human beings, which covers hardware-level technologies and software-level technologies. AI hardware technologies generally include computer vision technology, voice recognition technology, natural language processing (NLP) technology and learning/ deep learning (DL), big data processing technology, knowledge graph technology, etc.

Intelligent transportation generally refers to an intelligent traffic system (ITS), also referred to as an intelligent transportation system, means effectively integrating advanced science and technologies (information technology, computer technology, data communication technology, sensor technology, electronic control technology, automatic control theory, operations planning, artificial intelligence, etc.) in traffic transportation, service control and vehicle manufacturing, and strengthening a link among vehicles, roads and users, thereby forming a comprehensive transportation system that guarantees safety, enhances efficiency, improves environment and saves energy.

A data transmission method and apparatus, and an electronic device according to embodiments of the disclosure are described below with reference with attached drawings.

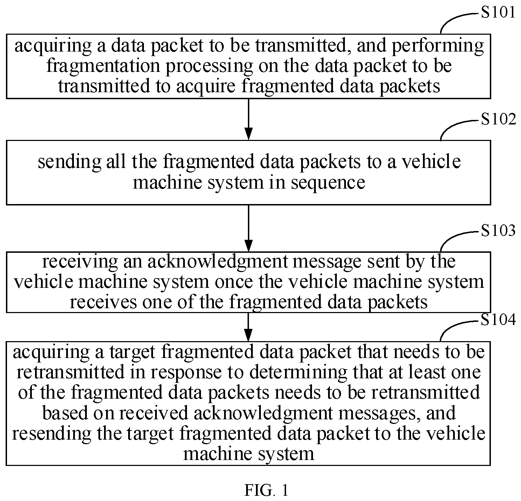

FIG. 1 is a diagram according to a first embodiment of the disclosure.

As illustrated in FIG. 1, the data transmission method provided in the embodiment includes the following blocks.

At block S101, a data packet to be transmitted is acquired, and fragmentation processing is performed on the data packet to be transmitted to acquire fragmented data packets.

It should be noted that, in the related art, data transmission is often achieved by a transmission control protocol (PCT). However, due to low transmission efficiency and long time consumption of a data transmission mode based on the TCP, in particular, for large volume data transmission and network congestions, the transmission efficiency is lower, and the occupied system resources are more.

Therefore, the data transmission mode proposed in the disclosure transmits the data packet to be transmitted using a user datagram protocol (UDP).

The data packet to be transmitted may be an audio data packet, a video data packet or the like that the terminal attempts to send to a vehicle machine system.

Further, since the UDP is limited by the transmission medium, the maximum transmission data packet of the UDP may not exceed 1472 bytes. Therefore, due to a limitation of a maximum transmission unit (MTU) and header data, each data packet to be transmitted that exceeds 1472 bytes needs to be fragmented before sending the data packet to be transmitted.

As a possible implementation, a byte size of the data packet to be transmitted may be acquired, the byte size may be compared with a preset byte size threshold (for example, 1400 bytes), and fragmentation processing is performed on the data packet to be transmitted to obtain at least two fragmented data packets each with the byte size not exceeding the byte size threshold in response to the byte size of the data packet to be transmitted being greater than the byte size threshold. The data packet to be transmitted is directly sent as a fragmented data packet in response to the byte size of the data packet to be transmitted being less than or equal to the byte size threshold, in this case, the size of the fragmented data packet is an actual size of the data packet to be transmitted.

At block S102, all the fragmented data packets are sent to a vehicle machine system in sequence.

Sending in sequence means sending the fragmented data packets based on a preset order.

As a possible implementation, all fragmented data packets may be numbered based on the preset order to obtain numbered fragmented data packets. Further, the fragmented data packets may be sent to a vehicle machine system in the preset order based on the numbers.

For example, 5 fragmented data packets A~E may be numbered in sequence, to obtain 5 fragmented data packets with numbers of 1-5. Further, the fragmented data packets A~E may be sent in the sequence of 1-5 starting from the fragmented data packet 1.

It needs to be noted that, the number of the fragmented data packet may be represented by 4 bytes. In this case, the size of each fragmented data packet does not exceed the preset byte size threshold plus 4 bytes. For example, the size of each fragmented data packet shall not exceed 1404 bytes in response to the preset byte size threshold being 1400.

At block S103, an acknowledgment message sent by the vehicle machine system once receiving one of the fragmented data packets is received.

In the embodiments of the disclosure, once receiving one fragmented data packet, the vehicle machine system may send one corresponding acknowledgment message to the terminal. For different fragmented data packets received by the vehicle machine system, the corresponding acknowledgment messages received by the terminal may be different. Correspondingly, the terminal may receive the acknowledgment message.

The acknowledgment message may be an acknowledge character, referred to as ACK.

At block S104, in response to determining that at least one of the fragmented data packets needs to be retransmitted based on received acknowledgment messages, a target fragmented data packet that needs to be retransmitted is acquired, and the target fragmented data packet is resent to the vehicle machine system.

In the embodiments of the disclosure, it may be determined whether a packet loss event occurs based on the acknowledgment message after the acknowledgment message is acquired. It indicates that a lost fragmented data packet needs to be retransmitted in response to identifying a packet loss event. In this case, the lost fragmented data packet may be acquired, that is, the target fragmented data packet that needs to be retransmitted is acquired, and the target fragmented data packet is resent.

It should be noted that, in the related art, in a data transmission process based on the TCP, all fragmented data packets need to be resent in response to identifying a packet loss event.

For example, 5 fragmented data packets with numbers of 1-5 need to be resent to the vehicle machine system in response to identifying that the fragmented data packet with the number of 2 is lost. In this case, it may take longer time and occupy more resources to resend all fragmented data packets, and it may burden a process that the vehicle machine system processes the fragmented data packets, which further extends a processing duration.

Based on the data transmission method provided in the disclosure, only the lost fragmented data packet may be resent, without resending all fragmented data packets.

For example, for 5 fragmented data packets with numbers of 1-5, only one fragmented data packet with the number of 2 needs to be resent to the vehicle machine system in response to identifying that the fragmented data packet with the number of 2 is lost, which shortens time consumption and improves transmission efficiency.

Based on the data transmission method provided in the disclosure, a data packet to be transmitted may be acquired, fragmentation processing may be performed on the data packet to be transmitted to acquire fragmented data packets, all the fragmented data packets may be sent to a vehicle machine system in sequence, and acknowledgment messages may be received, and a target fragmented data packet may be resent to the vehicle machine system in response to acquiring the target fragmented data packet that needs to be transmitted. Therefore, the disclosure may only retransmit a lost target fragmented data packet, so as to shorten data transmission time and enhance data transmission efficiency on the premise of ensuring data transmission stability.

Further, in the disclosure, a cache queue is configured on a terminal side. In this case, the fragmented data packets may be added to the cache queue, to extract the target fragmented data packet from the cache queue in response to determining that at least one of the fragmented data packets needs to be retransmitted.

Further, in the disclosure, when attempting to acquire the target fragmented data packet that needs to be retransmitted, it may be acquired based on the received acknowledgment message.

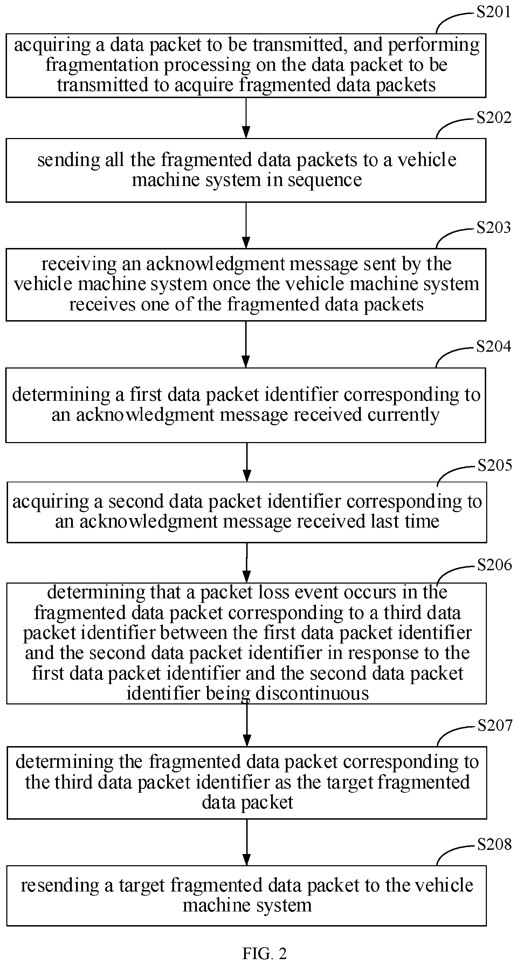

As a possible implementation, as illustrated in FIG. 2, the data transmission method provided in the disclosure, on the basis of the above embodiment, specifically includes the following blocks.

At block S201, a data packet to be transmitted is acquired, and fragmentation processing is performed on the data packet to be transmitted to acquire fragmented data packets.

At block S202, all the fragmented data packets are sent to a vehicle machine system in sequence.

At block S203, an acknowledgment message sent by the vehicle machine system once receiving one of the fragmented data packets is received.

The blocks S201-203 are the same as blocks S101-103 in the above embodiment, which are not repeated here.

A specific process of acquiring a target fragmented data packet that needs to be retransmitted in response to determining that at least one of the fragmented data packets needs to be retransmitted based on received acknowledgment messages at block S104 of the above embodiment may include the following blocks S204-S207.

At block S204, a first data packet identifier corresponding to an acknowledgment message received currently is determined based on the acknowledgment message received currently.

The acknowledgment message may carry a corresponding data packet identifier, for example, may carry a unique number of the received fragmented data packet.

At block S205, a second data packet identifier corresponding to an acknowledgment message received last time is acquired.

It should be noted that, since the fragmented data packets are sent to the vehicle machine system in sequence, the fragmented data packets are received by the vehicle machine system in sequence. In this case, based on the second data packet identifier corresponding to the previous acknowledgment message and the first data packet identifier corresponding to the current acknowledgment message, it may be determined whether the fragmented data packet is lost.

At block S206, it is determined that a packet loss event occurs in the fragmented data packet corresponding to a third data packet identifier between the first data packet identifier and the second data packet identifier in response to the first data packet identifier and the second data packet identifier being discontinuous.

For example, the first data packet identifier is 1, and the second data packet identifier is 3, in this case, it may be determined that a packet loss event occurs in the fragmented data packet corresponding to the third data packet identifier 2 between the first data packet identifier and the second data packet identifier.

At block S207, the fragmented data packet corresponding to the third data packet identifier is determined as the target fragmented data packet.

It needs to be noted that, in the disclosure, a number of times of occurrences of the packet loss event may be continuously updated before attempting to determine the fragmented data packet corresponding to the third data packet identifier as the target fragmented data packet.

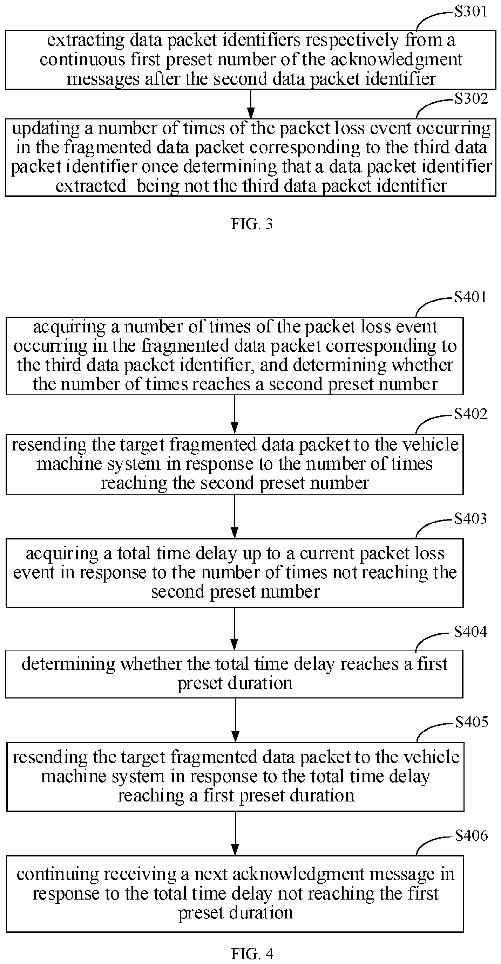

As a possible implementation, as illustrated in FIG. 3, on the basis of the above embodiment, a specific process before determining the fragmented data packet corresponding to the third data packet identifier as the target fragmented data packet, includes the following blocks.

At block S301, data packet identifiers are extracted respectively from a continuous first preset number of acknowledgment messages after the second data packet identifier.

The first preset number may be set based on actual situations. For example, the first preset number may be set to 2 or 4.

At block S302, a number of times of the packet loss event occurring in the fragmented data packet corresponding to the third data packet identifier is updated once determining that a data packet identifier extracted being not the third data packet identifier.

For example, the first data packet identifier is 1, and the second data packet identifier is 3, in this case, it may be determined that a packet loss event occurs in the fragmented data packet corresponding to the third data packet identifier 2. Further, data packet identifiers may be extracted continuously twice after the second data packet identifier 3, which are 4 and 5, respectively, not the third data packet identifier, in this case, the number of times of the packet loss event occurring in the fragmented data packet corresponding to the third data packet identifier 2 is 3.

At block S208, the target fragmented data packet is resent to the vehicle machine system.

It should be noted that, in the disclosure, when attempting to resending the target fragmented data packet to the vehicle machine system, resending time may be determined based on different bases.

As a possible implementation, as illustrated in FIG. 4, on the basis of the above embodiment, a specific process before determining the fragmented data packet corresponding to the third data packet identifier as the target fragmented data packet at the block S207, includes the following blocks.

At S401, a number of times of the packet loss event occurring in the fragmented data packet corresponding to the third data packet identifier is acquired, and it is determined whether the number of times reaches a second preset number of times.

It should be noted that, in the related art, retransmission time of the target fragmented data packet tends to be controlled only depending on a timing mechanism, that is, retransmission of the data packet needs to be performed after the end of the current timing period. In this way, unnecessary time consumption is increased.

In the embodiments of the disclosure, retransmission time may be more efficiently controlled in combination with a timing mechanism and identification of the number of times of occurrences of the packet loss event. Alternatively, the number of times of the packet loss event occurring in the fragmented data packet corresponding to the third data packet identifier may be acquired, and the number of times may be compared with the second preset number, and in response to the number of times reaching the second preset number, block S402 is executed; and in response to the number of times not reaching the second preset number, block S403 is executed.

The second preset number may be set based on actual situations. For example, the second preset number may be set to 2 or 3.

At block S402, the target fragmented data packet is resent to the vehicle machine system in response to the number of times reaching the second preset number.

In the embodiments of the disclosure, the target fragmented data packet may be directly resent to the vehicle machine system in response to the number of times of occurrences of the packet loss event reaching the second preset number.

At block S403, a total time delay up to a current packet loss event is acquired in response to the number of times not reaching the second preset number.

In the embodiments of the disclosure, retransmission time may be further determined based on the time delay in response to the number of times of occurrences of the packet loss event not reaching the second preset number.

At block S404, it is determined whether the total time delay reaches a first preset duration.

The first preset duration may be set based on actual situations. For example, the first preset duration may be set to 100 ms or 150 ms.

In the embodiments of the disclosure, the acquired total time delay may be compared with the first preset duration. Alternatively, block S405 is executed in response to the total time delay reaching the first preset duration; block S406 is executed in response to the total time delay not reaching the first preset duration.

At block S405, the target fragmented data packet is resent to the vehicle machine system in response to the total time delay reaching the first preset duration.

In the embodiment of the disclosure, the target fragmented data packet may be directly resent to the vehicle machine system in response to the total time delay reaching a first preset duration.

At block S406, a next acknowledgment message continues being received in response to the total time delay not reaching the first preset duration.

In the embodiments of the disclosure, the next acknowledgment message continues being received in response to the total time delay not reaching the first preset duration.

Based on the data transmission method in the embodiment of the disclosure, retransmission time may be more efficiently controlled in combination with a timing mechanism and identification of the number of times of occurrences of the packet loss event, which further shortens data transmission time and enhances data transmission efficiency.

Further, in the disclosure, for the occurrence of the packet loss event, a transmission rate and a storage space size of a buffer register may be dynamically adjusted based on the acquired number of times of occurrences of the packet loss event.

Alternatively, a transmission rate of the fragmented data packets and/or a current storage space size of a buffer register in the vehicle machine system may be adjusted based on the number of times after determining that the data packet identifier extracted being not the third data packet identifier.

Alternatively, the transmission rate of the fragmented data packets may be adjusted based on the number of times. Alternatively, the current storage space size of the buffer register in the vehicle machine system may be adjusted based on the number of times. Alternatively, the transmission rate of the fragmented data packets and the current storage space size of the buffer register in the vehicle machine system may be adjusted based on the number of times.

An adjustment process of the transmission rate and the current storage space size of the buffer register may be described as below correspondingly.

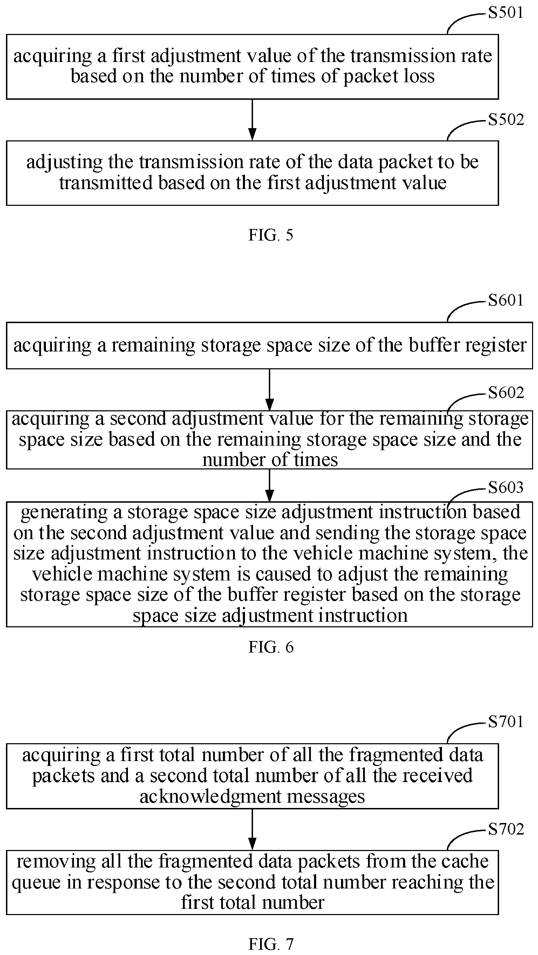

For the transmission rate, as a possible implementation, as illustrated in FIG. 5, on the basis of the above embodiment, it specifically includes the following blocks.

At block S501, a first adjustment value of the transmission rate is acquired based on the number of times.

In the embodiment of the disclosure, a mapping relationship between the number of times of occurrences of the packet loss event and the adjustment value of the transmission rate is preconfigured. Alternatively, after the number of times is acquired, the mapping relationship may be queried to acquire the first adjustment value of the transmission rate based on the number of times of occurrences of the packet loss event.

At block S502, the transmission rate of the data packet to be transmitted may be adjusted based on the first adjustment value.

It should be noted that, the occurrence of the packet loss event indicates that the transmission rate is too fast, therefore, in the disclosure, the first adjustment value may be set to a negative value, or an adjustment direction may be adjusted as downward adjustment, that is, reducing the transmission rate.

For the storage space size of the buffer register, as a possible implementation, as illustrated in FIG. 6, on the basis of the above embodiment, it specifically includes the following blocks.

At block S601, a remaining storage space size of the buffer register is acquired.

It should be noted that, in the disclosure, a specific method for acquiring the remaining storage space size of the buffer register is not limited, and may be set based on actual conditions. For example, a query instruction for querying the remaining storage space size of the buffer register may be sent to the vehicle machine system in response to a packet loss event, and based on a query result fed back by the vehicle machine system, the remaining storage space size of the buffer register may be acquired.

At block S602, a second adjustment value for the remaining storage space size may be acquired based on the remaining storage space size and the number of times.

In the embodiment of the disclosure, a mapping relationship between the number of times of occurrences of the packet loss event and the second adjustment value may be preconfigured. Alternatively, after the number of times of occurrences of the packet loss event is acquired, the mapping relationship may be queried to acquire the second adjustment value based on the number of times.

At block S603, a storage space size adjustment instruction is generated based on the second adjustment value and sent to the vehicle machine system, the vehicle machine system is caused to adjust the remaining storage space size of the buffer register based on the storage space size adjustment instruction.

It should be noted that, the occurrence of a packet loss event indicates that the remaining storage space size of the buffer register is too small, therefore, in the disclosure, the second adjustment value may be set to a positive value, or an adjustment direction may be adjusted as upward adjustment, that is, increasing the remaining storage space size of the buffer register.

It should be noted that, in the disclosure, after the transmission rate and the storage space size of the buffer register are adjusted, it may be continuously detected whether a packet loss event still occurs in the current transmission process. Alternatively, in response to a packet loss event still occurring, a part of time delay may be increased when a fragmented data packet is sent to control a frequency of sending data.

Based on the data transmission method in the embodiment of the disclosure, a transmission rate and a storage space size of a buffer register may be dynamically adjusted based on the number of times. Alternatively, once determining that the data packet identifier extracted being not the third data packet identifier, the transmission rate of the fragmented data packets and/or the current storage space size of the buffer register in the vehicle machine system may be adjusted based on the number of times to reduce a possibility of occurrence of a packet loss event as much as possible, which further ensures data transmission stability and enhances data transmission efficiency.

Further, in order to reduce resource occupancy and release more storage spaces of the terminal, a cache in the terminal may be removed after data transmission is completed.

As a possible implementation, as illustrated in FIG. 7, on the basis of the above embodiment, it specifically includes the following blocks.

At block S701, a first total number of all the fragmented data packets and a second total number of all the received acknowledgment messages are acquired.

At block S702, all the fragmented data packets in the cache queue are removed in response to the second total number reaching the first total number.

For example, the total number of all fragmented data packets is 5, and the total number of all received acknowledgment messages is 5, in this case, all the fragmented data packets in the cache queue are removed in response to the total number of all the received acknowledgment messages reaching the total number of all the fragmented data packets. For another example, the total number of all fragmented data packets is 5, and the total number of all received acknowledgment messages is 4, in this case, fragmented data packets are continued to be sent in sequence in response to the total number of all the received acknowledgment messages not reaching the total number of all the fragmented data packets.

Based on the data transmission method in the embodiment of the disclosure, a total number of all the fragmented data packets and a total number of all the received acknowledgment messages may be acquired, and further all the fragmented data packets in the cache queue are removed in response to the total number of all the received acknowledgment messages reaching the total number of all the fragmented data packets, so that all cache data in the cache queue of the terminal is removed in response to sending of the last data packet is completed by the terminal, to end the round of data transmission process, which further enhances data transmission efficiency and adaptability.

Further, in the disclosure, since a data transmission mode oriented to a connectionless UDP is used, in the data transmission process, when the vehicle machine system is disconnected from the terminal, the terminal still has the possibility of sending data. Therefore, in the disclosure, a connection state between the vehicle machine system and the terminal may be monitored based on the number of acknowledgment messages.

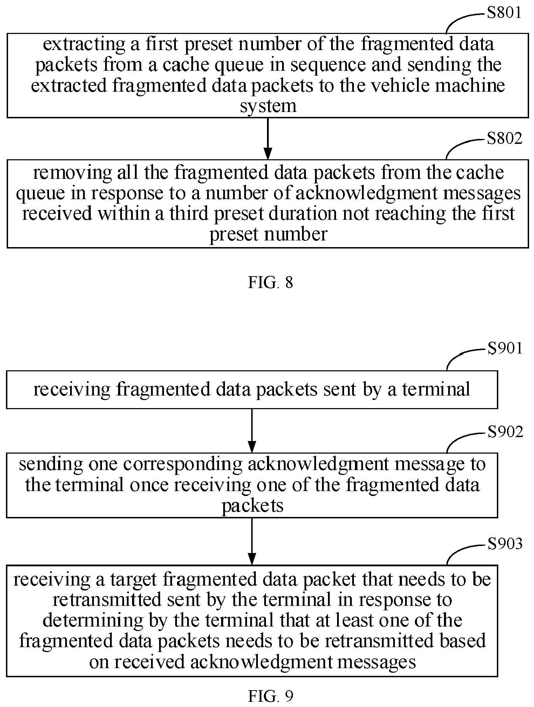

As a possible implementation, as illustrated in FIG. 8, on the basis of the above embodiment, it specifically includes the following blocks.

At block S801, a first preset number of the fragmented data packets are extracted from a cache queue in sequence and sent to the vehicle machine system.

The first preset number may be set based on actual situations. For example, the first preset number may be set to 5.

At block S802, all the fragmented data packets in the cache queue are removed in response to the number of the acknowledgment messages received within a third preset duration not reaching the first preset number.

The third preset duration may be set based on actual situations. For example, the third preset duration may be set to 80 ms or 90 ms.

For example, the first preset number is 5, and the third preset duration is 80 ms, in this case, after 5 fragmented data packets are sent to the vehicle machine system in sequence, it may be determined whether the number of acknowledgment messages received within 80 ms is 5. Alternatively, all fragmented data packets in the cache queue are removed in response to the number of acknowledgment messages received within 80 ms not reaching 5, to avoid waste of system memory resources; and the fragmented data packets continue to be sent to the vehicle machine system in response to the number of acknowledgment messages received within 80 ms reaching 5.

Based on the data transmission method in the embodiment of the disclosure, the first preset number of the fragmented data packets may be extracted from the cache queue in sequence and sent to the vehicle machine system, and further all the fragmented data packets in the cache queue are removed in response to the number of acknowledgment messages received within the third preset duration not reaching the first preset number, to solve the problem of continuous retransmission of the fragmented data packets when the vehicle machine system is disconnected from the terminal, which further improves the data transmission efficiency.

Another data transmission method and another, and an electronic device in the embodiment of the disclosure are described below with reference with attached drawings.

FIG. 9 is a diagram illustrating a ninth embodiment of the disclosure.

As illustrated in FIG. 9, the data transmission method provided in the embodiment includes the following blocks.

At block S901, fragmented data packets sent by a terminal are received.

In the embodiments of the disclosure, the terminal may send all the fragmented data packets to a vehicle machine system in sequence. Correspondingly, the vehicle machine system may receive the fragmented data packets sent by the terminal.

Since the terminal sends the fragmented data packets in sequence, the fragmented data packets are received by the vehicle machine system in sequence.

At block S902, one corresponding acknowledgment message is sent to the terminal once receiving one fragmented data packet.

In the embodiments of the disclosure, once receiving one fragmented data packet, the vehicle machine system may send one corresponding acknowledgment message to the terminal. For different fragmented data packets received, the corresponding acknowledgment messages sent to the terminal may be different.

At block S903, a target fragmented data packet that needs to be retransmitted sent by the terminal is received in response to determining by the terminal that at least one of the fragmented data packets needs to be retransmitted based on received acknowledgment messages.

In the embodiments of the disclosure, the terminal may determine whether a packet loss event occurs based on the acknowledgment message after acquiring the acknowledgment message. It indicates that a lost fragmented data packet needs to be retransmitted in response to identifying a packet loss event. In this case, the lost fragmented data packet may be acquired, that is, a target fragmented data packet that needs to be retransmitted is acquired, and the target fragmented data packet may be resent. Correspondingly, the vehicle machine system may receive the target fragmented data packet that needs to be transmitted sent by the terminal.

Based on the data transmission method in the embodiment of the disclosure, fragmented data packets sent by the terminal may be received, and once one fragmented data packet is received, one corresponding acknowledgment message may be sent to the terminal and further a target fragmented data packet that needs to be retransmitted sent by the terminal is received in response to determining by the terminal that at least one of the fragmented data packets needs to be retransmitted based on the received acknowledgment messages. Therefore, the disclosure may only receive the target fragmented data packet resent, so as to shorten data transmission time and enhance data transmission efficiency on the premise of ensuring data transmission stability.

Further, in the disclosure, when attempting to send one corresponding acknowledgment message to the terminal once one fragmented data packet is received by the vehicle machine system, a multithreading strategy may be adopted to read data.

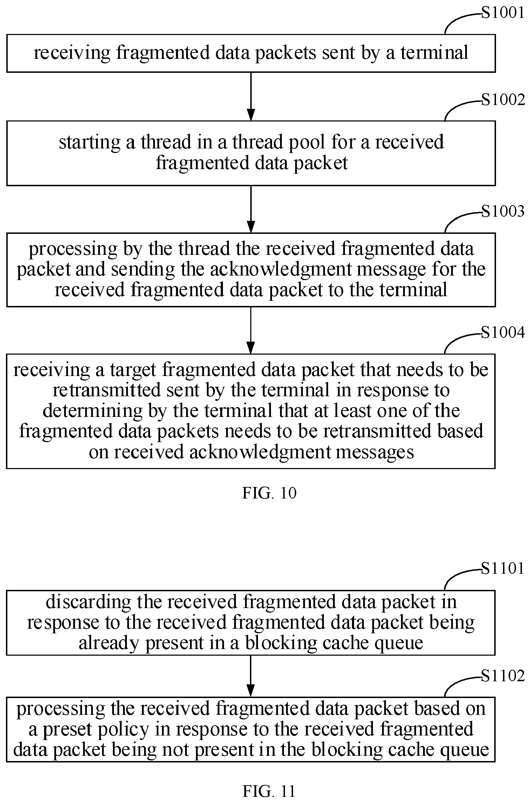

As a possible implementation, as illustrated in FIG. 10, on the basis of the above embodiment, it specifically includes the following blocks.

At block S1001, fragmented data packets sent by a terminal are received.

The block S1001 is the same as the block S901 in the above embodiment, which will not be repeated here.

A specific process of sending one corresponding acknowledgment message to the terminal once receiving one fragmented data packet at S902 in the above embodiment may include blocks S1002~S1003.

At block S1002, a corresponding thread in a thread pool is started for the received fragmented data packet.

It should be noted that, in the disclosure, the number of threads in the thread pool of the vehicle machine system is not limited, and may be set based on actual conditions. Alternatively, the number of threads in the thread pool may be set to the number of cores in a central processing unit (CPU). For example, for a 4-core CPU, the number of threads in the thread pool may be set to 4.

At block S103, the received fragmented data packet is processed by the corresponding thread and the acknowledgment message for the received fragmented data packet is sent to the terminal.

For example, for threads 1-8, threads 1-5 may be selected to receive fragmented data packets 1-5. Further, the acknowledgment message for the fragmented data packet may be sent to the terminal after the fragmented data packet is received.

At block S1004, a target fragmented data packet that needs to be retransmitted sent by the terminal is received in response to determining by the terminal that at least one of the fragmented data packets needs to be retransmitted based on the received acknowledgment message.

The block S1004 is the same as the block S903 in the above embodiment, which will not be repeated here.

Based on the data transmission method in the embodiment of the disclosure, a corresponding thread in the thread pool may be started for the received fragmented data packet, and further the received fragmented data packet is processed by the corresponding thread and the acknowledgment message for the received fragmented data packet is sent to the terminal. Therefore, in the disclosure, the vehicle machine system reads data based on a multithreading strategy, which shortens data transmission time and enhances data transmission efficiency, and at the same time, the thread pool may be used without wasting time to create a thread each time, so that a time delay of processing data may be further reduced.

Further, in the disclosure, the received fragmented data packet may be processed after the acknowledgment message for the received fragmented data packet is sent to the terminal.

As a possible implementation, as illustrated in FIG. 11, on the basis of the above embodiment, it specifically includes the following blocks.

At block S1101, the fragmented data packet is discarded in response to the fragmented data packet being already present in a blocking cache queue.

In the disclosure, the blocking cache queue is configured in the vehicle machine system. In this case, it may be determined whether the received fragmented data packet is present in the blocking cache queue. Alternatively, block S1101 is executed in response to the received fragmented data packet being already present in the blocking cache queue; block S 1102 is executed in response to the received fragmented data packet being not present in the blocking cache queue.

At block S 1102, the fragmented data packet is processed based on a preset policy in response to the fragmented data packet being not present in the blocking cache queue.

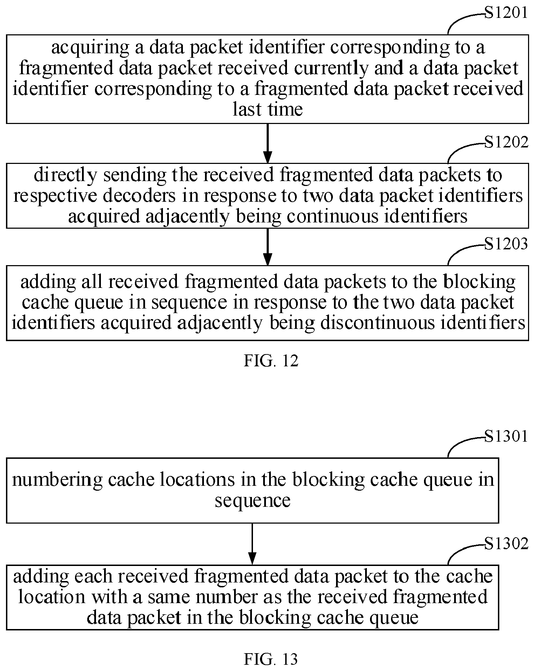

As a possible implementation, as illustrated in FIG. 12, on the basis of the above embodiment, a specific process of processing the fragmented data packet based on the preset strategy at block S 1102 specifically includes the following blocks.

At block S1201, a data packet identifier corresponding to a fragmented data packet received currently and a data packet identifier corresponding to a fragmented data packet received last time are acquired.

It should be noted that, since the fragmented data packets are sent to the vehicle machine system in sequence, the fragmented data packets are received by the vehicle machine system in sequence. In this case, it may be determined whether a fragmented data packet is lost based on the data packet identifier corresponding to the current fragmented data packet and the data packet identifier corresponding to the previous fragmented data packet.

At block S1202, the received fragmented data packets are directly sent to respective decoders in response to two data packet identifiers acquired adjacently being continuous identifiers.

For example, the data packet identifier corresponding to the previous fragmented data packet is 1, and the data packet identifier corresponding to the current fragmented data packet is 2, in this case, it indicates that no packet loss event occurs in response to two data packet identifiers acquired adjacently being continuous identifiers, and the received fragmented data packet may be directly sent to a corresponding decoder.

The decoder may receive the fragmented data packet and perform processing to obtain audio data and video data corresponding to the fragmented data packet.

At block S1203, all the received fragmented data packets are added to the blocking cache queue in sequence in response to the two data packet identifiers acquired adjacently being discontinuous identifiers.

For example, the data packet identifier corresponding to the previous fragmented data packet is 1, and the data packet identifier corresponding to the current fragmented data packet is 3, in this case, it indicates that a packet loss event occurs in response to the two data packet identifiers acquired adjacently being discontinuous identifiers, and all the received fragmented data packets may be added in sequence to the blocking cache queue.

As a possible implementation, as illustrated in FIG. 13, on the basis of the above embodiment, a specific process of adding all the received fragmented data packets to the blocking cache queue at block S1203 includes the following blocks.

At block S1301, cache locations in the blocking cache queue are numbered in sequence.

For example, the cache locations in the blocking cache queue may be numbered 1~n in sequence, n being an integer greater than 1.

At block S1302, each received fragmented data packet is added to the cache location with a same number as the received fragmented data packet in the blocking cache queue.

For example, 4 fragmented data packets with the numbers of 1, 3, 4, 5 are received, in this case, the 4 fragmented data packets are respectively added to the cache locations with the numbers of 1, 3, 4, 5 in the blocking cache queue.

Further, for the occurrence of a packet loss event, the vehicle machine system may send sorted data packets to respective decoders after receiving the target fragmented data packet that needs to be transmitted sent by the terminal.

Alternatively, all the fragmented data packets in the blocking cache queue may be taken out, and the target fragmented data packet and the fragmented data packets may be sorted and sent to the respective decoders.

For example, 4 fragmented data packets with the numbers of 1, 3, 4, 5 are cached in the blocking cache queue, in this case, after the resent target fragmented data packet 2 is received, the fragmented data packets 1, 3, 4, 5 in the blocking cache queue may be taken out, and the target fragmented data packet 2 and the taken out fragmented data packets 1, 3, 4, 5 may be sorted and sent to respective decoders.

It should be noted that, in the disclosure, for the occurrence of a packet loss event, the terminal may dynamically adjust a storage space size of a buffer register based on the acquired number of times of occurrences of the packet loss event. Correspondingly, the vehicle machine system may receive a storage space size adjustment instruction sent by the terminal, to adjust the current storage space size of the buffer register based on the storage space size adjustment instruction.

Based on the data transmission method in the embodiment of the disclosure, the received fragmented data packets may be processed to ensure the sequence of the data packets sent to the decoder, and further enhance data transmission efficiency and reliability.

The acquisition, storage, and application of user personal information involved in the technical solution of the disclosure comply with relevant laws and regulations, and do not violate public order and good customs.

Corresponding to the data transmission method provided in the above embodiments, one embodiment of the disclosure further provides a data transmission apparatus. Since the data transmission apparatus provided in the embodiments of the disclosure corresponds to the data transmission method provided in the above several embodiments of the disclosure, the implementation of the data transmission method is also applied to the data transmission apparatus provided in the embodiment, which will not be described in the embodiment.

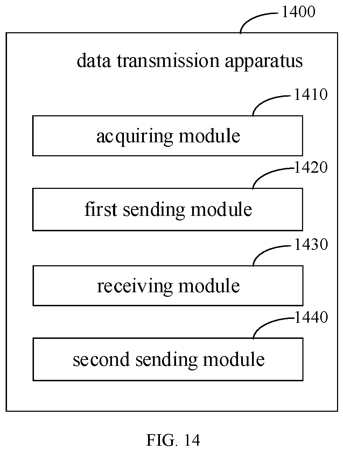

FIG. 14 is a block diagram of a data transmission apparatus in the embodiment of the disclosure.

As illustrated in FIG. 14, the apparatus 1400 includes an acquiring module 1410, a first sending module 1420, a receiving module 1430 and a second sending module 1440.

The acquiring module 1410 is configured to acquire a data packet to be transmitted, and perform fragmentation processing on the data packet to be transmitted to acquire fragmented data packets.

The first sending module 1420 is configured to send all the fragmented data packets to a vehicle machine system in sequence.

The receiving module 1430 is configured to receive an acknowledgment message sent by the vehicle machine system once receiving one of the fragmented data packets.

The second sending module 1440 is configured to acquire a target fragmented data packet that needs to be retransmitted in response to determining that at least one of the fragmented data packets needs to be retransmitted based on received acknowledgment messages, and resend the target fragmented data packet to the vehicle machine system.

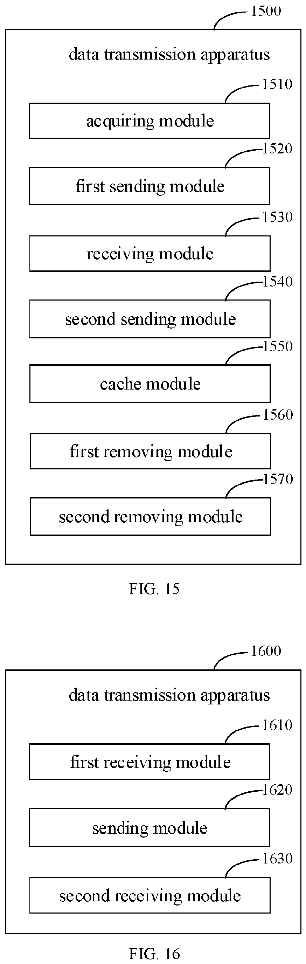

FIG. 15 is a block diagram of a data transmission apparatus in another embodiment of the disclosure.

As illustrated in FIG. 15, the apparatus 1500 includes an acquiring module 1510, a first sending module 1520, a receiving module 1530 and a second sending module 1540.

The apparatus 1500 further includes a cache module 1550.

The cache module 1550 is configured to add the fragmented data packets to a cache queue, so that the target fragmented data packet is extracted from the cache queue in response to determining that at least one of the fragmented data packets needs to be retransmitted.

The second sending module 1540 is further configured to: determine a first data packet identifier corresponding to an acknowledgment message received currently; acquire a second data packet identifier corresponding to an acknowledgment message received last time; determine that a packet loss event occurs in the fragmented data packet corresponding to a third data packet identifier between the first data packet identifier and the second data packet identifier in response to the first data packet identifier and the second data packet identifier being discontinuous; and determine the fragmented data packet corresponding to the third data packet identifier as the target fragmented data packet.

The second sending module 1540 is further configured to: extract data packet identifiers respectively from a continuous first preset number of acknowledgment messages after the second data packet identifier; and update a number of times of the packet loss event occurring in the fragmented data packet corresponding to the third data packet identifier once determining that a data packet identifier extracted being not the third data packet identifier.

The second sending module 1540 is further configured to: acquire a number of times of the packet loss event occurring in the fragmented data packet corresponding to the third data packet identifier, and determine whether the number of times of packet loss reaches a second preset number; and resend the target fragmented data packet to the vehicle machine system in response to the number of times reaching the second preset number.

The second sending module 1540 is further configured to: acquire a total time delay up to a current packet loss event in response to the number of times not reaching the second preset number; determine whether the total time delay reaches a first preset duration; and resend the target fragmented data packet to the vehicle machine system in response to the total time delay reaching the first preset duration.

The second sending module 1540 is further configured to: continue receiving a next acknowledgment message in response to the total time delay not reaching the first preset duration.

The second sending module 1540 is further configured to: adjust a transmission rate of the fragmented data packets and/or adjust a current storage space size of a buffer register in the vehicle machine system based on the number of times.

The second sending module 1540 is further configured to: acquire a first adjustment value of the transmission rate based on the number of times; and adjust the transmission rate of the data packet to be transmitted based on the first adjustment value.

The second sending module 1540 is further configured to: acquire a remaining storage space size of the buffer register; acquire a second adjustment value for the remaining storage space size based on the remaining storage space size and the number of times; and generate a storage space size adjustment instruction based on the second adjustment value and send the storage space size adjustment instruction to the vehicle machine system, the vehicle machine system is caused to adjust the remaining storage space size of the buffer register based on the storage space size adjustment instruction.

The apparatus 1500 further includes a first removing module 1560.

The first removing module 1560 is configured to acquire a first total number of all the fragmented data packets and a second total number of all the received acknowledgment messages; and remove all the fragmented data packets from the cache queue in response to the second total number reaching the first total number.

The apparatus 1500 further includes a second removing module 1570.

The second removing module 1570 is configured to extract a first preset number of the fragmented data packets from a cache queue in sequence and send the extracted fragmented data packets to the vehicle machine system; and remove all the fragmented data packets from the cache queue in response to a number of acknowledgment messages received within a third preset duration not reaching the first preset number.

It should be noted that, the acquiring module 1510, the first sending module 1520, and the receiving module 1530 have the same functions and structures as the acquiring module 1410, the first sending module 1420 and the receiving module 1430.

Based on the data transmission apparatus provided in the disclosure, a data packet to be transmitted may be acquired, and fragmentation processing may be performed on the data packet to be transmitted to acquire fragmented data packets, all the fragmented data packets may be sent to a vehicle machine system in sequence and acknowledgment messages may be received, and further a target fragmented data packet may be resent to the vehicle machine system in response to acquiring the target fragmented data packet needing to be transmitted. Therefore, the disclosure may only retransmit a lost target fragmented data packet, so as to shorten data transmission time and enhance data transmission efficiency on the premise of ensuring data transmission stability.

FIG. 16 is a block diagram of a data transmission apparatus in another embodiment of the disclosure.

As illustrated in FIG. 16, the apparatus 1600 includes a first receiving module 1610, a sending module 1620 and a second receiving module 1630.

The first receiving module 1610 is configured to receive fragmented data packets sent by a terminal.

The sending module 1620 is configured to send one corresponding acknowledgment message to the terminal once receiving one fragmented data packet.

The second receiving module 1630 is configured to receive a target fragmented data packet that needs to be retransmitted sent by the terminal in response to determining by the terminal that at least one of the fragmented data packets needs to be retransmitted based on received acknowledgment messages.

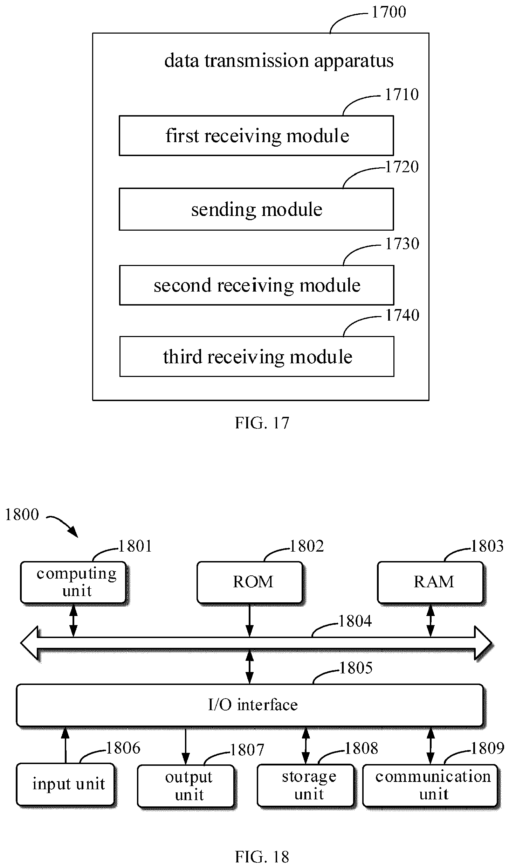

FIG. 17 is a block diagram of a data transmission apparatus in another embodiment of the disclosure.

As illustrated in FIG. 17, the apparatus 1700 includes a first receiving module 1710, a sending module 1720 and a second receiving module 1730.

The sending module 1720 is further configured to: start a thread in the thread pool for a received fragmented data packet; and process by the thread the received fragmented data packet, and send the acknowledgment message for the received fragmented data packet to the terminal.

The sending module 1720 is further configured to: discard the received fragmented data packet in response to the received fragmented data packet being already present in the blocking cache queue; and process the received fragmented data packet based on a preset policy in response to the received fragmented data packet being not present in the blocking cache queue.

The sending module 1720 is further configured to: acquire a data packet identifier corresponding to a fragmented data packet received currently and a data packet identifier corresponding to a fragmented data packet received last time; and directly send the received fragmented data packets to respective decoders in response to two data packet identifiers acquired adjacently being continuous identifiers; and add all the received fragmented data packets to the blocking cache queue in sequence in response to the two data packet identifiers acquired adjacently being discontinuous identifiers.

The sending module 1720 is further configured to: number cache locations in the blocking cache queue in sequence; and add each received fragmented data packet to the cache location with a same number as the received fragmented data packet in the blocking cache queue.

The sending module 1720 is further configured to: take out all the received fragmented data packets in the blocking cache queue, and sort the target fragmented data packet and the fragmented data packets taken out from the blocking cache queue and send the sorted fragmented data packets to respective decoders.

The apparatus 1700 further includes a third receiving module 1740.

The third receiving module 1740 is configured to receive a storage space size adjustment instruction sent by the terminal, to adjust a storage space size of a buffer register based on the storage space size adjustment instruction.

It should be noted that, the first receiving module 1710 and the second receiving module 1730 have the same functions and structures with the first receiving module 1610 and the second receiving module 1630.

Based on the data transmission apparatus in the embodiment of the disclosure, fragmented data packets sent by the terminal may be received, and one corresponding acknowledgment message may be sent to the terminal once receiving one fragmented data packet, and further a target fragmented data packet that needs to be retransmitted sent by the terminal is received in response to determining by the terminal that at least one of the fragmented data packets needs to be retransmitted based on the received acknowledgment messages. Therefore, the disclosure may only receive a target fragmented data packet resent, so as to shorten data transmission time and enhance data transmission efficiency on the premise of ensuring data transmission stability.

According to the embodiments of the disclosure, the disclosure further provides an electronic device, a readable storage medium and a computer program product.

FIG. 18 illustrates a block diagram of an electronic device 1800 configured to execute the embodiment of the disclosure. An electronic device is intended to represent various types of digital computers, such as laptop computers, desktop computers, workstations, personal digital assistants, servers, blade servers, mainframe computers, and other suitable computers. An electronic device may also represent various types of mobile apparatuses, such as personal digital assistants, cellular phones, smart phones, wearable devices, and other similar computing devices. The components shown herein, their connections and relations, and their functions are merely examples, and are not intended to limit the implementation of the disclosure described and/or required herein.

As illustrated in FIG. 18, the device 1800 includes a computing unit 1801, which may execute various appropriate actions and processings based on a computer program stored in a read-only memory (ROM) 1802 or a computer program loaded into a random access memory (RAM) 1803 from a storage unit 1808. In the RAM 1803, various programs and data required for operation of the device 1800 may also be stored. The computing unit 1801, the ROM 1802, and the RAM 1803 are connected to each other through a bus 1804. An input/output (I/O) interface 1805 is also connected to a bus 1804.

Several components in the device 1800 are connected to the I/O interface 1805, and include: an input unit 1806, for example, a keyboard, a mouse, etc.; an output unit 1807, for example, various types of displays, speakers, etc.; a storage unit 1808, for example, a magnetic disk, an optical disk, etc.; and a communication unit 1809, for example, a network card, a modem, a wireless communication transceiver, etc. The communication unit 1809 allows the device 1800 to exchange information/data with other devices over a computer network such as the Internet and/or various telecommunication networks.

The computing unit 1801 may be various general-purpose and/or special-purpose processing components with processing and computing capacities. Some examples of a computing unit 1801 include but not limited to a central processing unit (CPU), a graphics processing unit (GPU), various dedicated artificial intelligence (AI) computing chips, various computing units running a machine learning model algorithm, a digital signal processor (DSP), and any appropriate processor, controller, microcontroller, etc. The computing unit 1801 executes various methods and processings as described above, for example, a method for transmitting data. For example, in some embodiments, the method for transmitting data may be further achieved as a computer software program, which is physically contained in a machine readable medium, such as a memory unit 1808. In some embodiments, a part or all of computer programs may be loaded and/or mounted on the device 1800 via a ROM 1802 and/or a communication unit 1809. When the computer program is loaded on a RAM 1803 and executed by a computing unit 1801, one or more blocks in the method for transmitting data as described above may be performed. Alternatively, in other embodiments, a computing unit 1801 may be configured to perform a method for transmitting data in other appropriate ways (for example, by virtue of a firmware).

Various implementation modes of the systems and technologies described above may be implemented in a digital electronic circuit system, a field programmable gate array (FPGA), an application-specific integrated circuit (ASIC), an application specific standard product (ASSP), a system-on-chip (SOC) system, a complex programmable logic device, a computer hardware, a firmware, a software, and/or combinations thereof. The various implementation modes may include: being implemented in one or more computer programs, and the one or more computer programs may be executed and/or interpreted on a programmable system including at least one programmable processor, and the programmable processor may be a dedicated or a general-purpose programmable processor that may receive data and instructions from a storage system, at least one input apparatus, and at least one output apparatus, and transmit the data and instructions to the storage system, the at least one input apparatus, and the at least one output apparatus.

A computer code configured to execute a method in the present disclosure may be written with one or any combination of a plurality of programming languages. The programming languages may be provided to a processor or a controller of a general purpose computer, a dedicated computer, or other apparatuses for programmable data processing so that the function/operation specified in the flowchart and/or block diagram may be performed when the program code is executed by the processor or controller. A computer code may be performed completely or partly on the machine, performed partly on the machine as an independent software package and performed partly or completely on the remote machine or server.

In the context of the disclosure, a machine-readable medium may be a tangible medium that may contain or store a program intended for use in or in conjunction with an instruction execution system, apparatus, or device. A machine-readable medium may be a machine-readable signal medium or a machine-readable storage medium. A machine-readable storage medium may include but not limited to an electronic, magnetic, optical, electromagnetic, infrared, or semiconductor system, apparatus or device, or any appropriate combination thereof. A more specific example of a machine-readable storage medium includes an electronic connector with one or more cables, a portable computer disk, a hardware, a random access memory (RAM), a read-only memory (ROM), an erasable programmable read-only memory (an EPROM or a flash memory), an optical fiber device, and a portable optical disk read-only memory (CDROM), an optical storage device, a magnetic storage device, or any appropriate combination of the above.

In order to provide interaction with the user, the systems and technologies described here may be implemented on a computer, and the computer has: a display apparatus for displaying information to the user (for example, a CRT (cathode ray tube) or a LCD (liquid crystal display) monitor); and a keyboard and a pointing apparatus (for example, a mouse or a trackball) through which the user may provide input to the computer. Other types of apparatuses may further be configured to provide interaction with the user; for example, the feedback provided to the user may be any form of sensory feedback (for example, visual feedback, auditory feedback, or tactile feedback); and input from the user may be received in any form (including an acoustic input, a voice input, or a tactile input).

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation mode of the system and technology described herein), or a computing system including any combination of such back-end components, middleware components or front-end components. The system components may be connected to each other through any form or medium of digital data communication (for example, a communication network). Examples of communication networks include: a local area network (LAN), a wide area network (WAN), an internet and a blockchain network.

The computer system may include a client and a server. The client and server are generally far away from each other and generally interact with each other through a communication network. The relationship between the client and the server is generated by computer programs running on the corresponding computer and having a client-server relationship with each other. A server may be a cloud server, and further may be a server of a distributed system, or a server in combination with a blockchain.

In the disclosure, a computer program product including a computer program is provided, the computer program being configured to achieve the data transmission method when performed by a processor.

It should be understood that, various forms of procedures shown above may be configured to reorder, add or delete blocks. For example, blocks described in the disclosure may be executed in parallel, sequentially, or in different orders, as long as the desired result of the technical solution disclosed in the present disclosure may be achieved, which will not be limited herein.

The above specific implementations do not constitute a limitation on the protection scope of the disclosure. Those skilled in the art should understand that various modifications, combinations, sub-combinations and substitutions may be made according to design requirements and other factors. Any modification, equivalent replacement, improvement, etc., made within the principle of embodiments of the present disclosure shall be included within the protection scope of the present disclosure.

## Claims

1. A data transmission method, comprising:
acquiring (S101, S201) a data packet to be transmitted;
performing (S101, S201) fragmentation processing on the data packet to be transmitted to acquire fragmented data packets;
sending (S102, S202) all the fragmented data packets to a vehicle machine system in sequence;
receiving (S103, S203) an acknowledgment message sent by the vehicle machine system once the vehicle machine system receives one of the fragmented data packets;
acquiring (S104) a target fragmented data packet that needs to be retransmitted in response to determining that at least one of the fragmented data packets needs to be retransmitted based on received acknowledgment messages; and
resending (S104, S208) the target fragmented data packet to the vehicle machine system.

2. The method of claim 1, further comprising:
adding the fragmented data packets to a cache queue, so that the target fragmented data packet is extracted from the cache queue in response to determining that at least one of the fragmented data packets needs to be retransmitted.

3. The method of claim 1 or 2, said acquiring (S104) a target fragmented data packet that needs to be retransmitted in response to determining that at least one of the fragmented data packets needs to be retransmitted based on received acknowledgment messages, comprising:
determining (S204) a first data packet identifier corresponding to an acknowledgment message received currently;
acquiring (S205) a second data packet identifier corresponding to an acknowledgment message received last time;
determining (S206) that a packet loss event occurs in the fragmented data packet corresponding to a third data packet identifier between the first data packet identifier and the second data packet identifier, in response to the first data packet identifier and the second data packet identifier being discontinuous; and
determining (S207) the fragmented data packet corresponding to the third data packet identifier as the target fragmented data packet.

4. The method of claim 3, before determining (S207) the fragmented data packet corresponding to the third data packet identifier as the target fragmented data packet, further comprising:
extracting (S301) data packet identifiers respectively from a continuous first preset number of acknowledgment messages received after the acknowledgment message corresponding to the second data packet identifier; and
updating (S302) a number of times of the packet loss event occurring in the fragmented data packet corresponding to the third data packet identifier once determining that a data packet identifier extracted being not the third data packet identifier.

5. The method of claim 3 or 4, said resending (S104, S208) the target fragmented data packet to the vehicle machine system, comprising:
acquiring (S401) a number of times of the packet loss event occurring in the fragmented data packet corresponding to the third data packet identifier;
determining (S401) whether the number of times reaches a second preset number; and
resending (S402) the target fragmented data packet to the vehicle machine system in response to the number of times reaching the second preset number.

6. The method of claim 5, further comprising:
acquiring (S403) a total time delay up to a current packet loss event in response to the number of times not reaching the second preset number;
determining (S404) whether the total time delay reaches a first preset duration;
resending (S405) the target fragmented data packet to the vehicle machine system in response to the total time delay reaching the first preset duration; and
continuing (S406) receiving a next acknowledgment message in response to the total time delay not reaching the first preset duration.

7. The method of any of claims 4-6, after determining that the data packet identifier extracted being not the third data packet identifier, further comprising:
adjusting a transmission rate of the fragmented data packets and/or adjusting a current storage space size of a buffer register in the vehicle machine system based on the number of times.

8. The method of claim 7,
said adjusting a transmission rate of the fragmented data packets, comprising:
acquiring (S501) a first adjustment value of the transmission rate based on the number of times; and adjusting (S502) the transmission rate of the fragmented data packets based on the first adjustment value;
and/or
said adjusting a current storage space size of a buffer register in the vehicle machine system, comprising:
acquiring (S601) a remaining storage space size of the buffer register; acquiring (S602) a second adjustment value for the remaining storage space size based on the remaining storage space size and the number of times; generating (S603) a storage space size adjustment instruction based on the second adjustment value; and sending (S603) the storage space size adjustment instruction to the vehicle machine system, wherein the vehicle machine system is caused to adjust the remaining storage space size of the buffer register based on the storage space size adjustment instruction.

9. The method of any of claims 1-8, further comprising:
acquiring (S701) a first total number of all the fragmented data packets and a second total number of all the received acknowledgment messages; and removing (S702) all the fragmented data packets from the cache queue in response to the second total number reaching the first total number;
or
extracting (S801) a first preset number of the fragmented data packets from a cache queue in sequence and sending the extracted fragmented data packets to the vehicle machine system; and removing (S802) all the fragmented data packets from the cache queue in response to a number of acknowledgment messages received within a third preset duration not reaching the first preset number.

10. A data transmission method, comprising:
receiving (S901, S1001) fragmented data packets sent by a terminal;
sending (S902) one corresponding acknowledgment message to the terminal once receiving one of the fragmented data packets; and
receiving (S903, S1004) a target fragmented data packet that needs to be retransmitted sent by the terminal in response to determining by the terminal that at least one of the fragmented data packets needs to be retransmitted based on received acknowledgment messages.

11. The method of claim 10, said sending (S902) one corresponding acknowledgment message to the terminal once receiving one of the fragmented data packets, comprising:
starting (S1002) a thread in a thread pool for a received fragmented data packet;
processing (S1003) by the thread the received fragmented data packet; and
sending (S1003) the acknowledgment message for the received fragmented data packet to the terminal.

12. The method of claim 11, after sending (S1003) the acknowledgment message for the received fragmented data packet to the terminal, further comprising:
discarding (S101) the received fragmented data packet in response to the received fragmented data packet being already present in a blocking cache queue; and
processing (S1102) the received fragmented data packet based on a preset policy in response to the received fragmented data packet being not present in the blocking cache queue.

13. The method of claim 12, said processing (S1102) the received fragmented data packet based on a preset policy, comprising:
acquiring (S1201) a data packet identifier corresponding to a fragmented data packet received currently and a data packet identifier corresponding to a fragmented data packet received last time;
directly sending (S1202) the fragmented data packet received currently and the fragmented data packet received last time to respective decoders in response to two data packet identifiers acquired adjacently being continuous identifiers; and
adding (S1203) all received fragmented data packets to the blocking cache queue in sequence in response to the two data packet identifiers acquired adjacently being discontinuous identifiers.

14. The method of any of claims 10-13, further comprising:
receiving a storage space size adjustment instruction sent by the terminal, to adjust a storage space size of a buffer register based on the storage space size adjustment instruction.

15. An electronic device, comprising a processor and a memory;
wherein, the processor runs a program corresponding to executable program codes by reading the executable program codes stored in the memory, to achieve the method of any of claims 1 to 9 or claims 10 to 13.
